(19) **Europäisches Patentamt European Patent Office Office européen des brevets**

(11) **EP 4 195 324 B1**

(12) **EUROPEAN PATENT SPECIFICATION**

(45) Date of publication and mention of the grant of the patent:
**25.03.2026 Bulletin 2026/13**

(21) Application number: **22212369.7**

(22) Date of filing: **08.12.2022**

(51) International Patent Classification (IPC):
*H01M 4/505* (2010.01)     *H01M 4/525* (2010.01)
*H01M 4/02* (2006.01)      *H01M 4/36* (2006.01)

(52) Cooperative Patent Classification (CPC):
**H01M 4/525; H01M 4/366;** H01M 2004/028;
Y02E 60/10

(54) **CATHODE ACTIVE MATERIAL FOR LITHIUM SECONDARY BATTERY, CATHODE FOR LITHIUM SECONDARY BATTERY AND LITHIUM SECONDARY BATTERY INCLUDING THE SAME**

KATHODENAKTIVMATERIAL FÜR LITHIUMSEKUNDÄRBATTERIE, KATHODE FÜR LITHIUMSEKUNDÄRBATTERIE UND LITHIUMSEKUNDÄRBATTERIE DAMIT

MATÉRIAU ACTIF DE CATHODE POUR BATTERIE SECONDAIRE AU LITHIUM, CATHODE POUR BATTERIE SECONDAIRE AU LITHIUM ET BATTERIE SECONDAIRE AU LITHIUM LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.12.2021 KR 20210175545**

(43) Date of publication of application:
**14.06.2023 Bulletin 2023/24**

(73) Proprietor: **SK On Co., Ltd.**
**Seoul 03161 (KR)**

(72) Inventors:
• **CHOI, Jae Ho**
  **Daejeon 34124 (KR)**
• **NOH, Mi Jung**
  **Daejeon 34124 (KR)**

(74) Representative: **Stolmár & Partner**
**Patentanwälte PartG mbB**
**Blumenstraße 17**
**80331 München (DE)**

(56) References cited:
**WO-A1-2021/040033     US-A1- 2021 167 366**

**Description**

[BACKGROUND OF THE INVENTION]

1. Field of the Invention

The present invention relates to a cathode active material for a lithium secondary battery, a cathode for a lithium secondary battery including the same and a lithium secondary battery including the cathode. More particularly, the present invention relates to a lithium metal oxide-based cathode active material, a cathode including the same and a lithium secondary battery including the cathode.

2. Description of the Related Art

A secondary battery is a battery which can be repeatedly charged and discharged. With rapid progress of information and communication, and display industries, the secondary battery has been widely applied to various portable telecommunication electronic devices such as a camcorder, a mobile phone, a laptop computer as a power source thereof. Recently, a battery pack including the secondary battery has also been developed and applied to an eco-friendly automobile such as a hybrid vehicle as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

The lithium secondary battery may include: an electrode assembly including a cathode, an anode, and a separation membrane (separator); and an electrolyte in which the electrode assembly is impregnated. In addition, the lithium secondary battery may further include, for example, a pouch-shaped outer case in which the electrode assembly and the electrolyte are housed.

As a field, to which the lithium secondary battery is applied, is expanded to large devices such as a hybrid vehicle, etc., a high nickel-based lithium oxide having an increased nickel content as a cathode active material to secure a high capacity of the lithium secondary battery is known in the art.

However, in the generally known high nickel-based lithium oxide, life-span and operational stability of the lithium secondary battery may be deteriorated due to an occurrence of a cation disorder in which nickel ions are present at lithium ion sites.

US 2021/167366 A1 discloses a positive electrode active material including a first and a second lithium nickel transition metal oxide in a defined ratio.

WO 2021/040033 A1 discloses a positive electrode active material including a lithium-nickel composite oxide having a hexagonal layered structure and configured by single primary particles and secondary particles.

[SUMMARY OF THE INVENTION]

An object of the present invention is to provide a cathode active material for a lithium secondary battery having improved operational stability and capacity retention characteristics.

Another object of the present invention is to provide a cathode for a lithium secondary battery including the cathode active material having improved operational stability and capacity retention characteristics, and a lithium secondary battery including the cathode.

To achieve the above objects, according to an aspect of the present invention, there is provided a cathode active material for a lithium secondary battery, which includes: a first cathode active material having a circularity of 0.9 to 0.96; and a second cathode active material having a smaller circularity than that of the first cathode active material, wherein a content of the second cathode active material may be smaller than the content of the first cathode active material.

For example, the first cathode active material and the second cathode active material may be mixed in a mixing weight ratio of 9: 1 to 6:4.

In some embodiments, the first cathode active material and the second cathode active material may each independently include lithium metal oxide particles represented by Formula 1 below.

$$[\text{Formula 1}] \qquad \text{Li}_x\text{Ni}_y\text{M1}_{1-y}\text{O}_z$$

In Formula 1, M1 may be at least one element selected from the group consisting of B, Al, Si, Ti, V, Cr, Mn, Fe, Co, Cu, Zn, Y, Zr, Mo, Sn and W, and x may be $0 < x \leq 1.1$, y may be $0.8 \leq y \leq 0.98$, and z may be $2.0 \leq z \leq 2.02$.

In one embodiment, in Formula 1, y may be $0.8 \leq y \leq 0.95$.

In some embodiments, the cathode active material for a lithium secondary battery may have an average circularity of 0.9 to 0.96. The average circularity means an arithmetic average value of the circularities of all particles forming the cathode active material for a lithium secondary battery.

In some embodiments, the second cathode active material may have a circularity of less than 0.96, for example, 0.9 or more but less than 0.96.

The difference in the circularity between the first cathode active material and the second cathode active material is 0.01 or more.

For example, the first cathode active material may have an average circularity of 0.95 to 0.96, and the second cathode active material may have an average circularity of 0.9 to 0.95.

In some embodiments, the first cathode active material may have a polycrystalline structure. For example, the first cathode active material may be polycrystalline particles.

In some embodiments, the second cathode active material may have a single crystal structure. For example, the second cathode active material may be single crystal particles.

In some embodiments, the first cathode active material may have an average particle diameter D50 larger than the average particle diameter of the second cathode active material. For example, the first cathode active material may have an average particle diameter (D50) of 8 to 20 $\mu$m, and the second cathode active material may have an average particle diameter (D50) of 2 to 8 $\mu$m.

In some embodiments, the first cathode active material may have a secondary particle structure, and the second cathode active material may have a single particle structure.

In some embodiments, the cathode active material for a lithium secondary battery may have a tap density of 3.66 g/cc or more when pressing it at 20 MPa, for example, 3.66 to 4.0 g/cc.

In addition, according to another aspect of the present invention, there is provided a cathode for a lithium secondary battery, which includes: a cathode active material layer including the above-described cathode active material for a lithium secondary battery. For example, the cathode may include a cathode current collector, and a cathode active material layer formed on the cathode current collector.

In some embodiments, the cathode active material layer may have an electrode density of 2.5 to 4.0 g/cc.

Further, according to another aspect of the present invention, there is provided a lithium secondary battery which includes: a cathode including the above-described cathode active material for a lithium secondary battery; and an anode disposed to face the cathode.

The cathode active material for a lithium secondary battery according to exemplary embodiments may include different types of cathode active material particles having different circularities in a predetermined content ratio. By including the different types of cathode active material particles having different circularities, packing properties of the cathode active material may be improved, and deteriorations in the electrode density and energy density may be prevented. In addition, the cathode active material may have a high circularity, and in this case, structural stability of the cathode active material may be improved, and initial capacity and battery efficiency characteristics of the lithium secondary battery may be enhanced.

In addition, the different types of cathode active material particles may have polycrystalline and single crystal structures, respectively. In this case, a cell chemical performance of the cathode active material may be improved by the polycrystalline particles having a relatively high circularity. Further, the structural stability of the cathode active material may be further enhanced by the single crystal particles having a relatively low circularity.

Furthermore, each of the different types of cathode active materials may be a lithium metal oxide including nickel in a high content, wherein lithium nickel and transition metal bound in a predetermined range. In this case, the structure of the active material is stabilized while maintaining the high-capacity characteristics of the cathode active material, such that life-span and operational stability may be improved.

[BRIEF DESCRIPTION OF THE DRAWINGS]

The above and other objects, features and other advantages of the present invention will be more clearly understood from the following detailed description taken in conjunction with the accompanying drawings, in which:

FIGS. 1 and 2 are a schematic plan view and a cross-sectional view of a lithium secondary battery according to exemplary embodiments, respectively;

FIGS. 3A and 3B are graphs illustrating circularity distributions of a first cathode active material and a second cathode active material of Example 1, respectively;

FIGS. 4A and 4B are scanning electron microscopy (SEM) images of cross-sections of cathodes for a lithium secondary battery according to Examples 1 and 2, respectively; and

FIGS. 5A to 5C are SEM images of cross-sections of cathodes for a lithium secondary battery according to Comparative Examples 1 to 3, respectively.

[DETAILED DESCRIPTION OF THE INVENTION]

Embodiments of the present invention provide a cathode active material for a lithium secondary battery, which includes different types of lithium metal oxide particles having different structures and shapes, and a cathode for a lithium secondary battery including the same and a lithium secondary battery including the electrode.

As used herein, the term "lithium metal oxide" refers to a composite oxide including lithium and at least one alkali metal, alkaline earth metal, transition metal, post-transition metal or metalloid other than lithium.

Hereinafter, embodiments of the present invention will be described in detail.

**<Cathode active material for a lithium secondary battery>**

The cathode active material for a lithium secondary battery according to exemplary embodiments may include a first cathode active material having a circularity of 0.9 to 0.96, and a second cathode active material having a smaller circularity than that of the first cathode active material.

The circularity of the first cathode active material means a circularity of particles at 50% of a volume fraction of 10,000 cathode active material particles included in the first cathode active material. The circularity of the second cathode active material means a circularity of particles at a volume fraction of 50% of 10,000 cathode active material particles included in the second cathode active material.

For example, the first cathode active material and the second cathode active material may include spherical-shaped cathode active material particles. A perfect spherical shape has a circularity value of 1, and it means that the closer the circularity value of a particle is to 1, the closer the shape of the particle is to the perfect spherical shape.

The circularity of a particle is calculated as a value obtained by squaring a ratio of a circumferential length of a circle having the same area as that of the particle to a circumferential length of the particle. The circularity of the particles is calculated by Equation 1 below.

[Equation 1]

$$\text{Circularity} = 4\pi A/P^2$$

In Equation 1, A is an area of the particle, and P is a circumferential length of the particle.

The area and the circumferential length of the particles may be measured using image analysis software from images obtained by observing a cross section of the active material with a scanning electron microscope (SEM). For example, as the image analysis software, Image J may be used. Alternatively, the circularity of the particles may be measured by a flow particle image analyzer.

As the cathode active material according to exemplary embodiments includes different types of particles having different circularities, more particles may be packaged in a determined space. For example, the second cathode active material particles having a small circularity may be uniformly dispersed and distributed between the first cathode active material particles having a large circularity. In this case, damage to the cathode active material particles due to an excessive pressure or pressing may be prevented, and a high packing density may be implemented. Accordingly, an energy density per unit volume of the electrode may be increased.

In some embodiments, the second cathode active material may have a circularity of less than 0.96, and preferably 0.9 or more but less than 0.96. Within the above range, the cathode active material for a lithium secondary battery may have a high circularity as a whole, and structural stability may be enhanced. For example, if the circularity of the second cathode active material is less than 0.9, the strength of the particles is reduced, and thus particles may be broken or damaged during high voltage driving and charging/discharging behavior. For example, if the circularity of the second cathode active material is 0.96 or more, packing properties of the cathode active material may be deteriorated, and charge/discharge capacity and electrochemical performance may be reduced.

According to exemplary embodiments, the cathode active material for a lithium secondary battery may have an average circularity of 0.9 to 0.96. For example, the cathode active material for a lithium secondary battery may have an average circularity of 0.95 to 0.96, preferably 0.955 to 0.960, and more preferably 0.955 or more but less than 0.960. The average circularity of the cathode active material for a lithium secondary battery may be an arithmetic average value of the circularities of the first cathode active material and the circularities of the second cathode active material.

Within the above range, mechanical and electrical stability of the cathode active material may be enhanced, and life-span stability and capacity maintenance characteristics of the cathode and the secondary battery may be improved.

For example, since the cathode active material for a lithium secondary battery has an average circularity of 0.95 or more, structural stability of the cathode active material is improved as a whole, and thereby preventing breakage and defects of the particles due to repeated charging and discharging and physical impact. In addition, since the cathode active material has a high average circularity, a contact area between the particles may be increased during pressing the electrode. In this case, ions/electrons may easily move through boundaries between the particles, and an adhesive force between the particles may be increased.

For example, since the cathode active material for a lithium secondary battery has an average circularity of 0.96 or less, a decrease in the electrode density due to the structural characteristics of the spherical particles may be prevented, and charge/discharge capacity and initial efficiency of the secondary battery may be improved.

In addition, by including different types of cathode active material particles having different circularities, packing density of the cathode active material may be further increased. For example, the closer the circularity of the cathode active material particle to 1, the more structurally stable, but the packing properties of the particles may be decreased during a pressing process, and thus the electrode density may be reduced. In this case, an energy density per unit volume may be reduced, and thus capacity characteristics and initial efficiency may be decreased.

The difference in the circularity between the first cathode active material and the second cathode active material is 0.01 or more. Within the above range, it is possible to maintain the structural stability of the cathode active material and implement a high electrode density during pressing.

In one embodiment, the difference in the circularity between the first cathode active material and the second cathode active material may be 0.01 to 0.02, and preferably 0.01 to 0.015. If the difference in the circularity between the first cathode active material and the second cathode active material is less than 0.01, the packing properties of the particles may be decreased, and thus the capacity per unit volume may be reduced. If the difference in the circularity between the first cathode active material and the second cathode active material is larger than 0.02, overall circularity of the cathode active material may be reduced, and thus the structural stability may be deteriorated, as well as the life-span performance of the electrode may be decreased.

For example, the first cathode active material may have a circularity of 0.95 to 0.96, and the second cathode active material may have a circularity of 0.9 to 0.95. Within the above range, a filling density may be increased while the cathode active material for a lithium secondary battery has a high average circularity as a whole. Accordingly, the mechanical and electrochemical stability of the electrode may be enhanced, and capacity and output characteristics may be improved.

According to exemplary embodiments, the cathode active material for a lithium secondary battery may include lithium metal oxide particles represented by Formula 1 below. For example, the first cathode active material and the second cathode active material may each independently include lithium metal oxide particles represented by Formula 1 below.

$$[Formula\ 1] \qquad Li_xNi_yM1_{1-y}O_z$$

In Formula 1, M1 may be at least one element selected from the group consisting of B, Al, Si, Ti, V, Cr, Mn, Fe, Co, Cu, Zn, Y, Zr, Mo, Sn, and W. x may be $0 < x \leq 1.1$, y may be $0.8 \leq y \leq 0.98$, and z may be $2.0 \leq z \leq 2.02$.

For example, the first cathode active material and the second cathode active material may include lithium-nickel composite metal oxide particles including nickel in a high content, and lithium, nickel, and metal elements other than nickel in a predetermined range.

As used herein, the term "excess amount" refers to the case of being included in the largest content or molar ratio among metals other than lithium. As used herein, the term "content of element" or "concentration of element" may mean a molar ratio in lithium metal oxide.

According to some embodiments, in Formula 1, Ni may have a molar ratio or concentration (y) of 0.8 or more and 0.98 or less. If the Ni concentration is less than about 0.8, a lithium secondary battery having a sufficient high capacity may not be implemented. In addition, the effect of increasing the capacity according to the insertion of M1, which will be described below, may not be substantially implemented. If the Ni concentration exceeds about 0.98, stability of the cathode active material is excessively deteriorated, which may cause a reduction in life-span and mechanical instability.

Preferably, in Formula 1, Ni may have a molar ratio or concentration of 0.8 to 0.95, or 0.8 to 0.9. For example, in Formula 1, y may be $0.8 \leq y \leq 0.95$. In this case, it is possible to prevent side reactions and structure degradation of the cathode active material while maintaining a high capacity.

For example, Ni may be provided as a metal associated with a capacity of the lithium secondary battery. Accordingly, as described above, by employing the composition including a high content of Ni in the lithium metal oxide particles, a high-capacity cathode and a lithium secondary battery may be provided, and output thereof may also be increased.

As described above, the higher the content of Ni, the better the capacity of the lithium secondary battery, but it may be disadvantageous in terms of life-span characteristics, as well as mechanical and electrical stabilities. For example, when the content of Ni is excessively increased, faults such as an ignition, short-circuit, etc. may not be sufficiently suppressed upon occurring a penetration caused by an external object. In addition, as the strength of the particles is decreased, fracture or breakage may occur when applying an excessive pressure, and thus, there may be a limitation in increasing the electrode density.

The cathode active material for a lithium secondary battery according to exemplary embodiments may have a high average circularity, thereby improving the structural stability and strength of the particles. Accordingly, it is possible to implement a high packing density, and even when used in a high voltage battery, it is possible to prevent damage and breakage of the active material particles. Accordingly, a secondary battery having a high capacity and a high output may be provided, and a cycle life may also be increased.

In some embodiments, by distributing M1 together in the lithium metal oxide particles, chemical and mechanical instability caused by Ni may be improved. For example, M1 may include Co and Mn, and may further include Al in one embodiment.

Mn may be provided as metal associated with the mechanical and electrical stabilities of the lithium secondary battery. For example, it is possible to suppress or reduce a fault such as an ignition, short-circuit, or the like, which occurs by Mn when the cathode is penetrated by an external object, and thereby increasing the life-span of the lithium secondary battery. Further, due to Co, conductivity of the lithium-nickel composite metal oxide particles may be improved, and the resistance may be reduced, thereby improving an output of the secondary battery.

As described above, when the lithium metal oxide particles include Ni, Co, Mn, Al, or the like, the oxidation numbers of Co and Al may be fixed to + trivalent (3), and the oxidation number of Mn may be fixed to + tetravalent (4). The oxidation number of Ni may have a variable oxidation number of + divalent (2) to + tetravalent (4) according to synthesis conditions and an operational environment of the secondary battery.

In some embodiments, the lithium metal oxide particles may further include a metal element having an element size similar to nickel and an oxidation number of + divalent (2). For example, the lithium metal oxide particles may further include Be, Mg, Ca, Sr, Ba and/or Ra.

In this case, at least one element having an oxidation number of + divalent (2) may be included to suppress transition or substitution of + divalent (2) Ni to lithium sites. Thereby, an occurrence of a cation disorder in which Ni ions are present or transferred at Li ion sites is suppressed, and life-span stability and capacity retention characteristics may be improved.

For example, the first cathode active material and the second cathode active material may include lithium metal oxide particles represented by Formula 2 below.

$$[\text{Formula 2}] \qquad Li_xNi_yM1_{1-y}M2_aO_z$$

In Formula 2, definitions of M1, x, y, and z are the same as in Formula 1, and M2 may be at least one element selected from the group consisting of Be, Mg, Ca, Sr, Ba and Ra. In Formula 2, a may be a molar ratio of M2 weight corresponding to the case of larger than 0% but less than 2.5% of Ni weight, for example, a may be $0.0002 \leq a \leq 0.02$.

If the content of M2 exceeds 2.5% by weight ("wt.%") of the weight of Ni, as the Ni ions exceed the amount corresponding to the disorder caused by the Ni ions present at the lithium ion sites, the initial resistance of the lithium secondary battery may be rather increased and a discharge capacity may be reduced.

In some embodiments, the first cathode active material may have a polycrystalline structure. In one embodiment, the first cathode active material may include particles having a polycrystalline structure, for example, may be composed of polycrystalline particles. The polycrystalline structure may mean a structure having several small individual crystals separated from each other by grain boundaries in the particle.

As the first cathode active material having a relatively large circularity has the polycrystalline structure, a movement path of lithium ions through the grain boundaries may be secured. Thereby, the structural stability of the cathode active material may be enhanced, and the capacity characteristics and high speed charging characteristics of the battery may be improved.

In some embodiments, the second cathode active material may have a single crystal structure. In one embodiment, the second cathode active material may include particles having a single crystal structure, for example, may be composed of single crystal particles. The single crystal structure may mean a structure having only one crystal in a particle.

As the single crystal structure has only one crystal in one particle, cracking and degradation of the particles due to the pressing process and repeated charging and discharging may be prevented. Accordingly, since the second cathode active material having a relatively small circularity has a single crystal structure having the same orientation, the structural stability of the cathode active material may be enhanced, and thus the life-span and operational stability of the lithium secondary battery may be improved.

In one embodiment, the second cathode active material may be arranged in a direction parallel to 001 crystal plane. Since the crystal direction of the second cathode active material is regularly oriented, the movement path of lithium ions may be reduced, and thus ion/electric conductivities may be improved.

According to exemplary embodiments, the first cathode active material may have a secondary particle structure, and the second cathode active material may have a single particle structure. For example, the single particle and the secondary particle may be classified by a morphology of the particles. For example, the secondary particle and the single particle may be classified based on a cross-sectional image of the particle measured with a scanning electron microscope (SEM).

The secondary particles may mean particles in which a plurality of primary particles are aggregated to be considered or observed as substantially one particle. For example, in the case of the secondary particles, a boundary of the primary particles may be observed in the cross-sectional SEM image.

The single particle may mean a monolith rather than an aggregate. For example, in the case of the single particle, a boundary between the primary particles may not be observed in the cross-sectional SEM image, unlike the secondary particles.

For example, the first cathode active material may have a polycrystalline secondary particle structure formed by aggregation or assembly of a plurality of primary particles. For example, the second cathode active material may have a monocrystalline single particle structure.

As the first cathode active material having a relatively high circularity has a secondary particle structure, cracks inside the particles may be prevented by high circularity, and movement of lithium ions through the boundary may be facilitated by the secondary particle structure. Accordingly, charging/discharging speed may be improved, and capacity retention characteristics may be enhanced.

As the second cathode active material having a relatively low circularity has a single particle structure, packing properties of the electrode may be improved due to the low circularity, and cracks inside the particles may be prevented by the single particle structure. Accordingly, life-span characteristics and long-term operational stability of the battery may be improved.

According to exemplary embodiments, the content of the second cathode active material may be smaller than the content of the first cathode active material. For example, the first cathode active material may be included in an excess amount of the cathode active material for a lithium secondary battery. In this case, mechanical strength and structural stability of the cathode active material may be enhanced, and packing density and packing properties may be improved.

The first cathode active material and the second cathode active material is mixed in a mixing weight ratio of 9.5:0.5 to 5.5:4.5. Within the above range, the average circularity of the cathode active material for a lithium secondary battery may be increased, and fillability between the active material particles may be improved. Thereby, it is possible to provide a high energy density and improve cycle life-span characteristics of the secondary battery.

Preferably, the mixing weight ratio of the first cathode active material and the second cathode active material may be 9:1 to 6:4, for example, 8:2. Within the above range, high output characteristics and life-span characteristics of the secondary battery may be further improved.

In exemplary embodiments, the average particle diameter D50 of the second cathode active material may be smaller than the average particle diameter D50 of the first cathode active material. The average particle diameter (D50) means the longest diameter of particles at a volume fraction of 50% in the cumulative particle size distribution. Thereby, particles of the second cathode active material having a low circularity may be uniformly distributed among particles of the first cathode active material having a relatively high circularity, such that packing property of the cathode active material for a lithium secondary battery may be improved.

In some embodiments, the first cathode active material may have an average particle diameter (D50) of 8 to 20 $\mu$m, preferably 10 to 20 $\mu$m, and more preferably 10 to 18 $\mu$m. For example, when the average particle diameter of the first cathode active material having a polycrystalline structure is less than 8 $\mu$m, a tap density of the active material may be decreased. For example, if the average particle diameter of the first cathode active material exceeds 20 $\mu$m, a diffusion path of lithium ions may be lengthened, thereby causing a deterioration in electrochemical properties.

In some embodiments, the second cathode active material may have an average particle diameter (D50) of 2 to 8 $\mu$m, and preferably 2 to 3.5 $\mu$m. For example, if the average particle diameter of the second cathode active material having a single crystal structure is less than 2 $\mu$m, the tap density and stability of the active material may be deteriorated. For example, if the average particle diameter of the second cathode active material exceeds 8 $\mu$m, the active material particle distribution is not uniform, such that the tap density may be decreased, and the diffusion path of lithium ions may be lengthened.

In addition, as the second cathode active material is filled between the first cathode active materials within the above average particle diameter range, the filling density of the electrode may be increased. In this case, the thickness of the electrode may be reduced, and a pressure required to implement a high electrode density and a thin electrode thickness may be reduced. Accordingly, it is possible to prevent the active material particles from breaking due to an excessive pressure.

In some embodiments, the cathode active material for a lithium secondary battery may have a tap density of 3.66 g/cc or more when pressing it at 20 MPa. For example, the tap density may be measured by putting 100 g of the cathode active material for a lithium secondary battery into a 100 ml measuring cylinder and then tapping 1000 times at a pressure of 20 MPa. For example, the tap density may be 3.66 to 4.0 g/cc, or 3.70 to 4.0 g/cc.

As described above, since the cathode active material includes different types of lithium metal oxide particles having different circularities, for example, a high tap density may be provided even at a low pressure during a pressing process for manufacturing an electrode. In this case, the initial charge/discharge capacity may be increased while preventing structural degradation and defects of the cathode active material due to the excessive pressure.

## <Cathode for a lithium secondary battery and lithium secondary battery>

Hereinafter, preferred embodiments of the present invention will be described in detail with reference to the accompanying drawings.

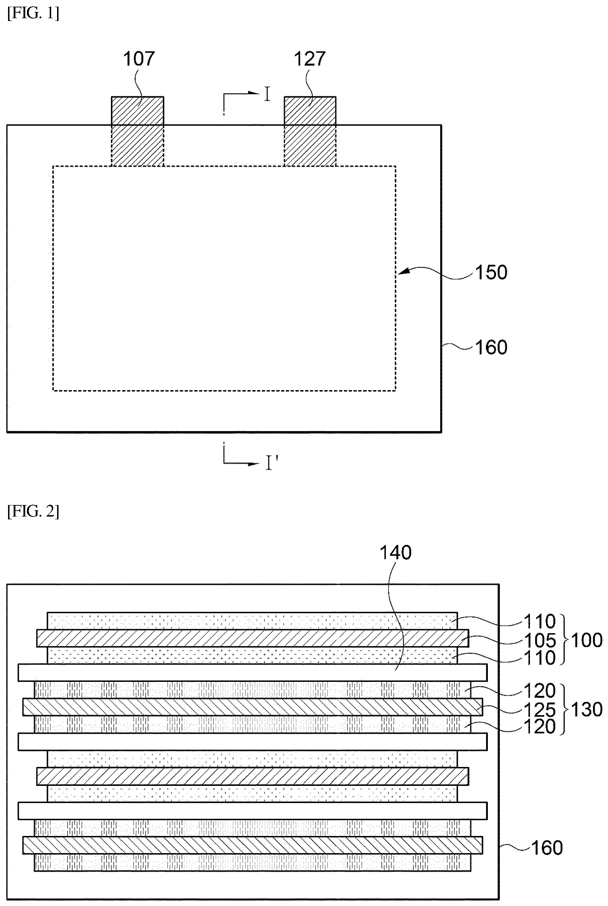

FIGS. 1 and 2 are a schematic plan view and a cross-sectional view illustrating a lithium secondary battery according to exemplary embodiments, respectively.

Hereinafter, a lithium secondary battery which includes a cathode including the above-described cathode active material for a lithium secondary battery will be described with reference to FIGS. 1 and 2.

Referring to FIGS. 1 and 2, the lithium secondary battery may include a cathode 100 including a cathode active material layer containing the above-described cathode active material for a lithium secondary battery, and an anode 130 disposed to face the cathode.

The cathode 100 may include a cathode active material layer 110 formed by applying the above-described cathode active material to a cathode current collector 105.

For example, a slurry may be prepared by mixing the cathode active material with a binder, a conductive material and/or a dispersant in a solvent, followed by stirring the same. The cathode slurry may be coated on the cathode current collector 105, followed by compressing and drying to form the cathode.

The cathode current collector 105 may include, for example, stainless steel, nickel, aluminum, titanium, copper, or an alloy thereof, and preferably includes aluminum or an aluminum alloy.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, an amount of the binder for forming the cathode active material layer 110 may be reduced and an amount of the cathode active material may be relatively increased. Thereby, the output and capacity of the secondary battery may be improved.

The conductive material may be included to facilitate electron transfer between the active material particles. For example, the conductive material may include a carbon-based conductive material such as graphite, carbon black, graphene, or carbon nanotubes and/or a metal-based conductive material such as tin, tin oxide, titanium oxide, or a perovskite material such as $LaSrCoO_3$, and $LaSrMnO_3$, etc.

In some embodiments, the cathode 100 may have an electrode density of 2.5 and 4.0 g/cc, and preferably 3.2 and 3.8 g/cc. For example, the electrode density may mean a value obtained by dividing a total weight of the cathode active material layer 110 by a total volume of the cathode active material layer 110.

If the electrode density of the cathode 100 is less than 2.5 g/cc, the energy density per unit volume is reduced, such that charge/discharge capacity and high speed charging characteristics of the secondary battery may be decreased. If the electrode density of the cathode 100 exceeds 4.0 g/cc, cracks and damage of the cathode active material may be increased since an excessive pressure is required during the pressing process.

In some embodiments, the cathode 100 may have an electrode density of 3.66 g/cc or more when pressing it at 20 MPa, and preferably 3.70 to 4.0 g/cc. By including different types of lithium metal oxide particles having different circularities, a high electrode density may be secured without excessive pressure, and thus charging/discharging and life-span characteristics of the electrode may be improved.

The anode 130 may include an anode current collector 125 and an anode active material layer 120 formed by coating the anode current collector 125 with an anode active material.

The anode active material useable in the present invention may include any material known in the related art, so long as it can intercalate and deintercalate lithium ions, without particular limitation thereof. For example, carbon-based materials such as crystalline carbon, amorphous carbon, carbon composite, carbon fiber, etc.; a lithium alloy; silicon or tin may be used. Examples of the amorphous carbon may include hard carbon, cokes, mesocarbon microbead (MCMB) calcined at a temperature of 1500 °C or lower, mesophase pitch-based carbon fiber (MPCF) or the like. Examples of the crystalline carbon may include graphite-based carbon such as natural graphite, artificial graphite, graphite cokes, graphite MCMB, graphite MPCF or the like. Other elements included in the lithium alloy may include, for example, aluminum, zinc, bismuth, cadmium, antimony, silicone, lead, tin, gallium, indium or the like.

The anode current collector 125 may include, for example, gold, stainless steel, nickel, aluminum, titanium, copper, or an alloy thereof, and preferably includes copper or a copper alloy.

In some embodiments, a slurry may be prepared by mixing the anode active material with a binder, a conductive material and/or a dispersing material in a solvent, followed by stirring the same. The anode current collector may be coated with the slurry, followed by compressing and drying to manufacture the anode 130.

As the binder and the conductive material, materials which are substantially the same as or similar to the above-described materials may be used. In some embodiments, the binder for forming the anode may include, for example, an aqueous binder such as styrene-butadiene rubber (SBR) for consistency with the carbon-based active material, and may be used together with a thickener such as carboxymethyl cellulose (CMC).

In some embodiments, the anode 130 may have an electrode density of 1.4 and 1.9 g/cc.

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fiber having a high melting point, polyethylene terephthalate fiber or the like.

According to exemplary embodiments, an electrode cell is defined by the cathode 100, the anode 130, and the separation membrane 140, and a plurality of electrode cells are laminated to form, for example, a jelly roll type electrode assembly 150. For example, the electrode assembly 150 may be formed by winding, lamination, folding, or the like of the separation membrane 140.

The electrode assembly may be housed in an outer case 160 together with an electrolyte to define the lithium secondary battery. According to exemplary embodiments, a non-aqueous electrolyte may be used as the electrolyte.

The non-aqueous electrolyte includes a lithium salt of an electrolyte and an organic solvent, and the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulforane, $\gamma$-butyrolactone, propylene sulfite, tetrahydrofurane, and the like may be used. These compounds may be used alone or in combination of two or more thereof.

As illustrated in FIG. 2, electrode tabs (a cathode tab and an anode tab) protrude from the cathode current collector 105 and the anode current collector 125, respectively, which belong to each electrode cell, and may extend to one side of the outer case 160. The electrode tabs may be fused together with the one side of the outer case 160 to form electrode leads (a cathode lead 107 and an anode lead 127) extending or exposed to an outside of the outer case 160.

The lithium secondary battery may be manufactured, for example, in a cylindrical shape using a can, a square shape, a pouch type or a coin shape.

According to exemplary embodiments, by including different types of lithium metal oxide particles having different circularities and having a high average circularity, chemical and structural stabilities of the cathode active material may be enhanced and packing properties may be improved. Accordingly, a lithium secondary battery having improved life-span and long-term stabilities may be implemented while suppressing a decrease in the capacity and average voltage.

Hereinafter, specific experimental examples are proposed to facilitate understanding of the present invention.

## Examples and Comparative Examples

### (1) Preparation of cathode active material

### 1) Preparative Example 1: Preparation of first cathode active material

$NiSO_4$, $CoSO_4$ and $MnSO_4$ were mixed in ratios (molar ratios) shown in Table 1 below, respectively, using distilled water from which internal dissolved oxygen is removed by bubbling with $N_2$ for 24 hours. The solution was introduced into a reactor at 50 °C, and a co-precipitation reaction was performed for 48 hours using NaOH and $NH_3H_2O$ as a precipitant and a chelating agent to form a nickel-cobalt-manganese hydroxide (composite metal salt compound) having a particle diameter of about 10 to 20 $\mu$m. At this time, pH was controlled by adjusting the concentrations and input amounts of NaOH and $NH_3H_2O$ so that the crystals may grow uniformly. The composite metal salt compound was dried at 80 °C for 12 hours, and then again dried at 110 °C for 12 hours.

Thereafter, lithium hydroxide was additionally added thereto so that a ratio of the composite metal salt compound to the lithium hydroxide was 1: 1.05, followed by uniformly stirring and mixing the same for 5 minutes. The mixture was put into a calcination furnace, heated to 710 °C at a heating rate of 2 °C /min, and maintained at 710 °C for 10 hours. Oxygen was passed continuously at a flow rate of 10 mL/min during heating and maintaining the temperature. After the end of the calcination, the mixture was naturally cooled to room temperature, followed by grinding and classification. At this time, zirconia balls were pulverized with a ball mill, and by controlling the size and time of the balls, polycrystalline lithium metal oxide particles having circularities shown in Table 1 below were obtained.

The compositions and circularities of the obtained lithium metal oxide particles are shown in Table 1 below (e.g., the first cathode active material of Example 5 has a formula of $LiNi_{0.8}Co_{0.1}Mn_{0.1}O_2$). At this time, the molar ratio of oxygen is fixed to 2.0.

### 2) Preparative Example 2: Preparation of second cathode active material

In order to obtain single crystal particles, the same process as in Preparative Example 1 was performed except that the pH was controlled by adjusting the concentrations and input amounts of NaOH and $NH_3H_2O$ during the preparation of nickel-cobalt-manganese hydroxide. As a result, single-crystal lithium metal oxide particles were obtained.

The compositions and circularities of the obtained lithium metal oxide particles are shown in Table 1 below. At this time, the molar ratio of oxygen is fixed to 2.0.

### 3) Measurement of circularity

Circularities of the prepared cathode active materials were measured using a particle analyzer (Morphologi 4, Malvern Panalytical). Specifically, 1 $mm^3$ of the prepared cathode active material sample was dispersed under conditions of 4 bar and 10 ms, and then the cathode active material particles were analyzed in a two-dimensional image. Thereafter, the circularity corresponding to 50% of the cumulative volume of 10,000 cathode active material particles was measured.

[TABLE 1]

| Section | First cathode active material | | | Second cathode active material | | | Average circularity |
|---|---|---|---|---|---|---|---|
| | Composition (Ni: Co : Mn) | Circularity | Content | Composition (Ni : Co : Mn) | Circularity | Content | |
| Example 1 | 8.8 : 0.9 : 0.3 | 0.960 | 90 | 8.8 : 0.9 : 0.3 | 0.944 | 10 | 0.958 |
| Example 2 | 8.8 : 0.9 : 0.3 | 0.960 | 80 | 8.8 : 0.9 : 0.3 | 0.944 | 20 | 0.957 |
| Example 3 | 8.8 : 0.9 : 0.3 | 0.960 | 70 | 8.8 : 0.9 : 0.3 | 0.944 | 30 | 0.955 |
| Example 4 | 8.8 : 0.9 : 0.3 | 0.960 | 60 | 8.8 : 0.9 : 0.3 | 0.944 | 40 | 0.954 |
| Example 5 | 8 : 1 : 1 | 0.962 | 80 | 8 : 1 : 1 | 0.945 | 20 | 0.959 |
| Example 6 | 8 : 1 : 1 | 0.962 | 80 | 8.3 : 1.1 : 0.6 | 0.945 | 20 | 0.959 |
| Example 7 | 8.3 : 1.1 : 0.6 | 0.959 | 80 | 8.3 : 1.1 : 0.6 | 0.945 | 20 | 0.956 |
| Example 8 | 8.3 : 1.1 : 0.6 | 0.959 | 80 | 8.8 : 0.9 : 0.3 | 0.944 | 20 | 0.956 |
| Example 9 | 9.4 : 0.3 : 0.3 | 0.960 | 80 | 8.8 : 0.9 : 0.3 | 0.944 | 20 | 0.957 |
| Example 10 | 9.4 : 0.3 : 0.3 | 0.960 | 80 | 9.4 : 0.3 : 0.3 | 0.943 | 20 | 0.957 |
| Example 11 | 9.4 : 0.3 : 0.3 | 0.960 | 80 | 9.8 : 0.1 : 0.1 | 0.941 | 20 | 0.956 |
| Example 12 | 9.8 : 0.1 : 0.1 | 0.958 | 80 | 9.8 : 0.1 : 0.1 | 0.941 | 20 | 0.955 |
| Example 13 | 8.8 : 0.9 : 0.3 | 0.949 | 80 | 8.8 : 0.9 : 0.3 | 0.945 | 20 | 0.948 |
| Example 14 | 8.8 : 0.9 : 0.3 | 0.960 | 80 | 8.8 : 0.9 : 0.3 | 0.951 | 20 | 0.958 |
| Example 15 | 8.8 : 0.9 : 0.3 | 0.962 | 80 | 8.8 : 0.9 : 0.3 | 0.941 | 20 | 0.958 |
| Comparative Example 1 | 8.8 : 0.9 : 0.3 | 0.960 | 100 | - | - | - | 0.960 |
| Comparative Example 2 | 8.8 : 0.9 : 0.3 | 0.960 | 50 | 8.8 : 0.9 : 0.3 | 0.944 | 50 | 0.952 |
| Comparative Example 3 | 8.8 : 0.9 : 0.3 | 0.960 | 40 | 8.8 : 0.9 : 0.3 | 0.944 | 60 | 0.950 |
| Comparative Example 4 | 8.8 : 0.9 : 0.3 | 0.960 | 30 | 8.8 : 0.9 : 0.3 | 0.944 | 70 | 0.949 |
| Comparative Example 5 | 8.8 : 0.9 : 0.3 | 0.960 | 20 | 8.8 : 0.9 : 0.3 | 0.944 | 80 | 0.947 |

(continued)

| Section | First cathode active material | | | Second cathode active material | | | Average circularity |
| --- | --- | --- | --- | --- | --- | --- | --- |
| | Composition (Ni: Co : Mn) | Circularity | Content | Composition (Ni : Co : Mn) | Circularity | Content | |
| Comparative Example 6 | 8.8 : 0.9 : 0.3 | 0.960 | 10 | 8.8 : 0.9 : 0.3 | 0.944 | 90 | 0.946 |
| Comparative Example 7 | - | - | - | 8.8 : 0.9 : 0.3 | 0.944 | 100 | 0.944 |

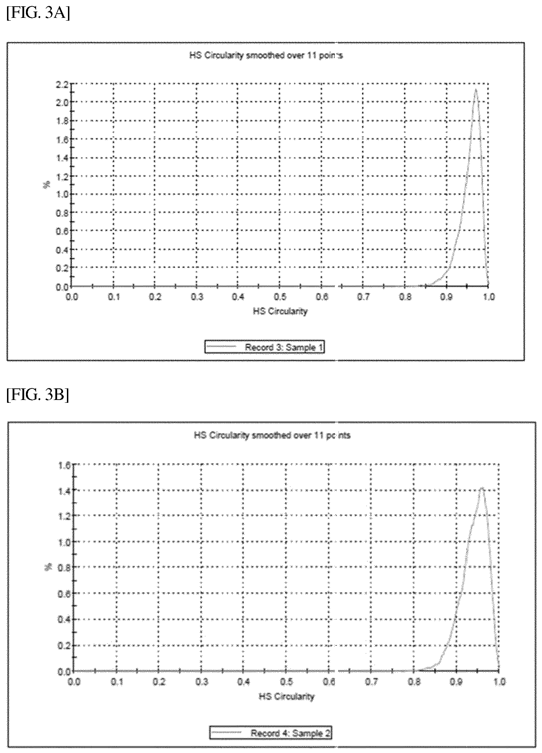

FIGS. 3A and 3B are graphs illustrating circularity distributions of the first cathode active material and the second cathode active material of Example 1, respectively.

Referring to FIGS. 3A and 3B, it can be confirmed that the circularity corresponding to 50% of the volume accumulation amount of the first cathode active material of Example 1 is 0.960, and it can be seen that the circularity corresponding to 50% of the volume accumulation amount of the second cathode active material of Example 1 is 0.944.

**(2) Manufacturing of secondary battery**

Secondary batteries were manufactured using the cathode active materials prepared in the examples and comparative examples described in the above Table 1. Specifically, the cathode active materials, Denka Black as a conductive material and PVDF as a binder were mixed in a mass ratio composition of 94:3:3, respectively, and then coated on an aluminum current collector and dried, followed by performing roll pressing at a pressure of 20 MPa to prepare a cathode.

An anode slurry, which includes 93 wt.% of natural graphite as an anode active material, 5 wt.% of KS6 as a flake type conductive material, 1 wt.% of styrene-butadiene rubber (SBR) as a binder, and 1 wt.% of carboxymethyl cellulose (CMC) as a thickener, was prepared. The anode slurry was applied to a copper substrate, followed by drying and pressing to prepare an anode.

The cathodes and the anodes prepared as described above were respectively notched in a predetermined size and stacked, then an electrode cell was fabricated between the cathode and the anode with a separator (polyethylene, thickness: 25 μm) interposed therebetween. Thereafter, tap parts of the cathode and the anode were welded, respectively. A combination of the welded cathode/separator/anode was put into a pouch, followed by sealing three sides of the pouch except for one side into which an electrolyte is injected. At this time, a portion having the electrode tab was included in the sealing part. After injecting the electrolytic through the remaining one side except for the sealing part, the remaining one side was also sealed, followed by impregnation for 12 hours or more.

The electrolyte used herein was prepared by dissolving 1M LiPF$_6$ solution in a mixed solvent of EC/EMC/DEC (25/45/30; volume ratio), and adding 1 wt.% of vinylene carbonate (VC), 0.5 wt.% of 1,3-propene sultone (PRS), and 0.5 wt.% of lithium bis(oxalato)borate (LiBOB) thereto.

**Experimental Example 1: Measurement of electrode density**

In the cathode prepared by performing roll pressing at a pressure of 20 MPa, the electrode density was measured by dividing a weight of the cathode active material layer by a volume of the cathode active material layer.

Measurement results are shown in Table 2 below.

**Experimental Example 2: Evaluation of initial discharge capacity and initial efficiency**

After charging (CC/CV, current rate 0.1 C, upper limit voltage 4.3 V, 0.05 C CUT-OFF) the prepared lithium secondary batteries in a chamber at 25 °C, battery capacities (initial charge capacities) were measured, and then discharging again (CC 0.1C 3.0 V CUT-OFF), battery capacities (initial discharge capacities) were measured.

Initial capacity efficiency of each lithium secondary battery was calculated by dividing the measured initial discharge capacity by the measured initial charge capacity, then converting it into a percentage (%).

Evaluation results are shown together in Table 2 below.

**Experimental Example 3: Evaluation of life-span capacity retention rate**

Executing charging (CC/CV, 0.5 C, 4.3 V, 0.05 C CUT-OFF) and discharging (CC, 1.0 C, 3.0 V CUT-OFF) on the manufactured secondary batteries at 45 °C was set to be one cycle, discharge capacities were measured after one cycle.

The cycle was repeated 100 times to evaluate the life-span capacity retention rate as a percentage of the value obtained by dividing the discharge capacity at 100 times by the discharge capacity at one time.

Evaluation results are shown in Table 2 below.

[TABLE 2]

| Section | Electrode density (g/cc) | Electrochemical performance | | |
|---|---|---|---|---|
| | | Initial discharge capacity (mah/g) | Initial efficiency (%) | Life-span retention rate @100cycle (%) |
| Example 1 | 3.66 | 211.5 | 89.9 | 92.2 |
| Example 2 | 3.70 | 211.6 | 90.0 | 92.3 |
| Example 3 | 3.67 | 211.5 | 89.8 | 92.0 |
| Example 4 | 3.68 | 211.6 | 89.7 | 91.9 |
| Example 5 | 3.71 | 204.6 | 90.8 | 93.8 |
| Example 6 | 3.71 | 206.7 | 90.6 | 93.2 |
| Example 7 | 3.70 | 208.2 | 90.2 | 92.9 |
| Example 8 | 3.70 | 209.1 | 90.0 | 92.5 |
| Example 9 | 3.71 | 214.8 | 89.7 | 91.9 |
| Example 10 | 3.69 | 218.1 | 89.5 | 91.2 |
| Example 11 | 3.68 | 221.7 | 89.1 | 90.8 |
| Example 12 | 3.68 | 222.3 | 88.9 | 90.1 |
| Example 13 | 3.67 | 211.5 | 89.6 | 91.5 |
| Example 14 | 3.64 | 211.1 | 89.3 | 91.1 |
| Example 15 | 3.63 | 211.1 | 89.4 | 91.0 |
| Comparative Example 1 | 3.60 | 211.3 | 89.2 | 91.2 |
| Comparative Example 2 | 3.65 | 211.0 | 89.3 | 91.7 |
| Comparative Example 3 | 3.63 | 210.9 | 89.1 | 91.4 |
| Comparative Example 4 | 3.62 | 210.7 | 89.1 | 91.0 |
| Comparative Example 5 | 3.58 | 209.8 | 88.4 | 90.8 |
| Comparative Example 6 | 3.55 | 209.3 | 88.3 | 90.5 |
| Comparative Example 7 | 3.50 | 211.2 | 87.8 | 90.0 |

Referring to Tables 1 and 2 above, it can be confirmed that the lithium secondary batteries according to the exemplary embodiments provided a higher electrode density as a whole than the comparative examples, and the capacity retention rate was enhanced.

In the cathodes for a lithium secondary battery according to the comparative examples, it is difficult to increase the electrode density to 3.66 g/cc or more, and in order to provide the same capacity, the thickness of the electrode is increased compared to the examples, such that the energy density of the secondary battery may be reduced. In addition, when performing the roll pressing process under excessive pressure, the active material may be broken or structural degradation may occur, and thereby causing a reduction in electrochemical properties.

In addition, in the case of Comparative Examples 2 to 7, the second cathode active material having a low circularity was included in an excess amount, and had a low average circularity value. Accordingly, structural stability of the cathode active material was deteriorated, and cracks and degradation of active material particles might occur due to high voltage driving and repeated charging and discharging. Referring to Tables 1 and 2, it can be confirmed that the comparative examples have reduced life-span characteristics compared to the examples having the same composition.

In the case of Examples 11 and 12 in which the Ni molar ratio of the lithium metal oxide particles is 0.95 or more, it can be confirmed that the initial charge/discharge capacity is improved, but the life-span retention rate is slightly reduced.

In the case of Example 14, in which the difference in the circularity between the first cathode active material and the second cathode active material is less than 0.01, and Example 15, in which the difference in the circularity is larger than 0.02, it can be confirmed that the electrode density and life-span maintenance rate are slightly decreased.

**Experimental Example 4: Analysis of surface of cathode active material**

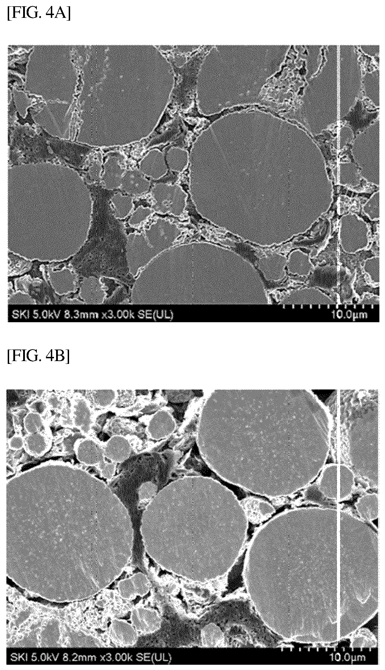

FIGS. 4A and 4B are scanning electron microscopy (SEM) images of cathode cross-sections after 100 cycles of charging and discharging were performed on the lithium secondary batteries according to Examples 1 and 2, respectively.

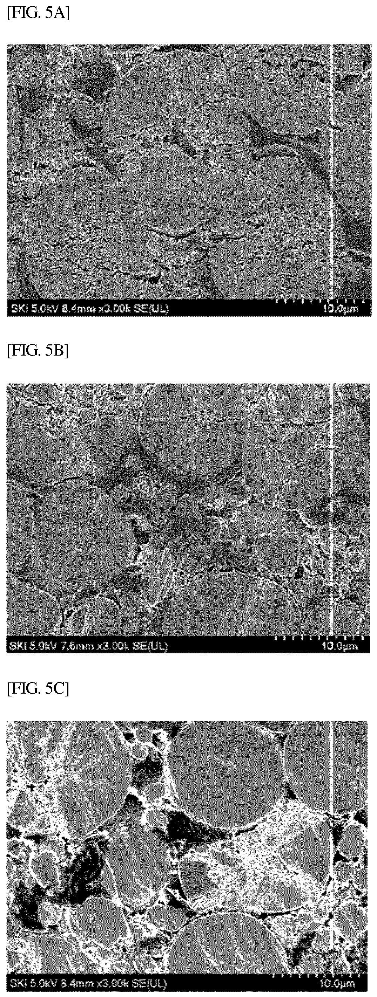

FIGS. 5A to 5C are SEM images of cathode cross sections after 100 cycles of charging and discharging were sequentially performed on the lithium secondary batteries according to Comparative Examples 1 to 3, respectively.
Referring to FIGS. 4A and 4B, it can be confirmed that, in the cathodes for a lithium secondary battery according to the exemplary embodiments, cracks and defects of the cathode active material particles after repeated charging and discharging were prevented.
However, Referring to FIGS. 5A to 5C, it can be confirmed that, in the case of the cathodes for a lithium secondary battery according to Comparative Examples 1 to 3, when repeatedly performing charging and discharging thereon, cracks or breakages occur in the cathode active material particles.

**Claims**

1. A cathode active material for a lithium secondary battery, comprising

   a first cathode active material having a circularity of 0.9 to 0.96; and
   a second cathode active material having a smaller circularity than that of the first cathode active material, and a difference in the circularity between the first cathode active material and the second cathode active material is 0.01 or more,
   the circularity of the first cathode active material is a circularity of a particle at a volume fraction of 50% in a cumulative particle size distribution of the first cathode active material, and the circularity of the second cathode active material is a circularity of a particle at a volume fraction of 50% in a cumulative particle size distribution of the second cathode active material,
   wherein the first cathode active material and the second cathode active material is mixed in a mixing weight ratio of 9.5:0.5 to 5.5:4.5,
   wherein the circularity of the particle is calculated by Equation 1:

$$[\text{Equation 1}]$$

$$\text{circularity} = 4\pi A/P^2$$

   in Equation 1, A is an area of the particle, and P is a circumferential length of the particle.

2. The cathode active material for a lithium secondary battery according to claim 1, wherein the first cathode active material and the second cathode active material each independently include lithium metal oxide particles represented by Formula 1 below:

   [Formula 1]      $Li_xNi_yM1_{1-y}O_z$

   (in Formula 1, M1 is at least one element selected from the group consisting of B, Al, Si, Ti, V, Cr, Mn, Fe, Co, Cu, Zn, Y, Zr, Mo, Sn and W, and x is $0 < x \leq 1.1$, y is $0.8 \leq y \leq 0.98$, and z is $2.0 \leq z \leq 2.02$).

3. The cathode active material for a lithium secondary battery according to claim 2, wherein, in Formula 1, y is $0.8 \leq y \leq 0.95$.

4. The cathode active material for a lithium secondary battery according to claim 1, wherein the first cathode active material and the second cathode active material are mixed in a mixing weight ratio of 9:1 to 6:4.

5. The cathode active material for a lithium secondary battery according to claim 1, wherein the cathode active material for a lithium secondary battery has an average circularity of 0.9 to 0.96.

6. The cathode active material for a lithium secondary battery according to claim 1, wherein the second cathode active material has a circularity of less than 0.96.

7. The cathode active material for a lithium secondary battery according to claim 1, wherein the first cathode active material has a circularity of 0.95 to 0.96, and the second cathode active material has a circularity of 0.9 to 0.95.

8. The cathode active material for a lithium secondary battery according to claim 1, wherein the first cathode active material has a polycrystalline structure, and the second cathode active material has a single crystal structure.

9. The cathode active material for a lithium secondary battery according to claim 1, wherein an average particle diameter (D50) of the second cathode active material is smaller than the average particle diameter (D50) of the first cathode active material, wherein the average particle diameter (D50) is the longest diameter of particles at a volume fraction of 50% in a cumulative particle size distribution.

10. The cathode active material for a lithium secondary battery according to claim 9, wherein the first cathode active material has an average particle diameter (D50) of 8 to 20 $\mu$m, and the second cathode active material has an average particle diameter (D50) of 2 to 8 $\mu$m.

11. The cathode active material for a lithium secondary battery according to claim 1, wherein the first cathode active material has a secondary particle structure, and the second cathode active material has a single particle structure.

12. The cathode active material for a lithium secondary battery according to claim 1, wherein the cathode active material has a tap density of 3.66 g/cc or more when tapping 1000 times at a pressure of 20 MPa.

13. A cathode for a lithium secondary battery comprising a cathode active material layer which comprises the cathode active material for a lithium secondary battery of claim 1.

14. A lithium secondary battery comprising:

a cathode which comprises the cathode active material for a lithium secondary battery of claim 1; and an anode disposed to face the cathode.

**Patentansprüche**

1. Kathodenaktivmaterial für eine Lithium-Sekundärbatterie, umfassend

ein erstes Kathodenaktivmaterial mit einer Zirkularität von 0,9 bis 0,96; und
ein zweites Kathodenaktivmaterial mit einer kleineren Zirkularität als die des ersten Kathodenaktivmaterials,
wobei ein Unterschied in der Zirkularität zwischen dem ersten Kathodenaktivmaterial und dem zweiten Kathodenaktivmaterial 0,01 oder mehr beträgt,
die Zirkularität des ersten Kathodenaktivmaterials eine Zirkularität eines Partikels bei einem Volumenanteil von 50% in einer kumulativen Partikelgrößenverteilung des ersten Kathodenaktivmaterials ist, und die Zirkularität des zweiten Kathodenaktivmaterials eine Zirkularität eines Partikels bei einem Volumenanteil von 50% in einer kumulativen Partikelgrößenverteilung des zweiten Kathodenaktivmaterials ist,
wobei das erste Kathodenaktivmaterial und das zweite Kathodenaktivmaterial in einem Mischungsgewichtsverhältnis von 9,5:0,5 bis 5,5:4,5 gemischt sind,
wobei die Zirkularität des Partikels durch Gleichung 1 berechnet wird:

$$[\text{Gleichung 1}]$$

$$\text{Zirkularität} = 4\pi A/P^2$$

wobei in Gleichung 1 A eine Fläche des Partikels ist und P eine Umfangslänge des Partikels ist.

2. Kathodenaktivmaterial für eine Lithium-Sekundärbatterie nach Anspruch 1, wobei das erste Kathodenaktivmaterial und das zweite Kathodenaktivmaterial jeweils unabhängig Lithiummetalloxidpartikel umfassen, die durch die folgende Formel 1 dargestellt sind:

[Formel 1] $\quad\quad Li_xNi_yM1_{1-y}O_z$

(wobei in Formel 1 M1 mindestens ein Element ist, das aus der Gruppe ausgewählt ist, die aus B, Al, Si, Ti, V, Cr, Mn, Fe, Co, Cu, Zn, Y, Zr, Mo, Sn und W besteht, und x $0 < x \leq 1,1$ ist, y $0,8 \leq y \leq 0,98$ ist und z $2,0 \leq z \leq 2,02$ ist).

3. Kathodenaktivmaterial für eine Lithium-Sekundärbatterie nach Anspruch 2, wobei in Formel 1 y $0,8 \leq y \leq 0,95$ ist.

4. Kathodenaktivmaterial für eine Lithium-Sekundärbatterie nach Anspruch 1, wobei das erste Kathodenaktivmaterial und das zweite Kathodenaktivmaterial in einem Mischungsgewichtsverhältnis von 9:1 bis 6:4 gemischt sind.

5. Kathodenaktivmaterial für eine Lithium-Sekundärbatterie nach Anspruch 1, wobei das Kathodenaktivmaterial für eine Lithium-Sekundärbatterie eine durchschnittliche Zirkularität von 0,9 bis 0,96 aufweist.

6. Kathodenaktivmaterial für eine Lithium-Sekundärbatterie nach Anspruch 1, wobei das zweite Kathodenaktivmaterial eine Zirkularität von weniger als 0,96 aufweist.

7. Kathodenaktivmaterial für eine Lithium-Sekundärbatterie nach Anspruch 1, wobei das erste Kathodenaktivmaterial eine Zirkularität von 0,95 bis 0,96 aufweist und das zweite Kathodenaktivmaterial eine Zirkularität von 0,9 bis 0,95 aufweist.

8. Kathodenaktivmaterial für eine Lithium-Sekundärbatterie nach Anspruch 1, wobei das erste Kathodenaktivmaterial eine polykristalline Struktur aufweist und das zweite Kathodenaktivmaterial eine Einkristallstruktur aufweist.

9. Kathodenaktivmaterial für eine Lithium-Sekundärbatterie nach Anspruch 1, wobei ein durchschnittlicher Partikeldurchmesser (D50) des zweiten Kathodenaktivmaterials kleiner ist als der durchschnittliche Partikeldurchmesser (D50) des ersten Kathodenaktivmaterials, wobei der durchschnittliche Partikeldurchmesser (D50) der längste Durchmesser von Partikeln bei einem Volumenanteil von 50% in einer kumulativen Partikelgrößenverteilung ist.

10. Kathodenaktivmaterial für eine Lithium-Sekundärbatterie nach Anspruch 9, wobei das erste Kathodenaktivmaterial einen durchschnittlichen Partikeldurchmesser (D50) von 8 bis 20 $\mu$m aufweist und das zweite Kathodenaktivmaterial einen durchschnittlichen Partikeldurchmesser (D50) von 2 bis 8 $\mu$m aufweist.

11. Kathodenaktivmaterial für eine Lithium-Sekundärbatterie nach Anspruch 1, wobei das erste Kathodenaktivmaterial eine Sekundärpartikelstruktur aufweist und das zweite Kathodenaktivmaterial eine Einzelpartikelstruktur aufweist.

12. Kathodenaktivmaterial für eine Lithium-Sekundärbatterie nach Anspruch 1, wobei das Kathodenaktivmaterial eine Klopfdichte von 3,66 g/cm$^3$ oder mehr aufweist, bei 1000 Mal klopfen bei einem Druck von 20 MPa.

13. Kathode für eine Lithium-Sekundärbatterie, umfassend eine Kathodenaktivmaterialschicht, die das Kathodenaktivmaterial für eine Lithium-Sekundärbatterie nach Anspruch 1 umfasst.

14. Lithium-Sekundärbatterie, umfassend:

   eine Kathode, die das Kathodenaktivmaterial für eine Lithium-Sekundärbatterie nach Anspruch 1 umfasst; und
   eine Anode, die so angeordnet ist, dass sie der Kathode zugewandt ist.

**Revendications**

1. Matériau actif cathodique pour une batterie secondaire au lithium, comprenant

   un premier matériau actif cathodique ayant une circularité de 0,9 à 0,96 ; et
   un deuxième matériau actif cathodique ayant une circularité inférieure à celle du premier matériau actif cathodique, dans lequel une différence de circularité entre le premier matériau actif cathodique et le deuxième matériau actif cathodique est de 0,01 ou plus,
   la circularité du premier matériau actif cathodique étant une circularité d'une particule à une fraction volumique de 50 % dans une distribution cumulative de tailles de particules du premier matériau actif cathodique, et la circularité du deuxième matériau actif cathodique est une circularité d'une particule à une fraction volumique de 50 % dans une distribution cumulative de tailles de particules du deuxième matériau actif cathodique,

le premier matériau actif cathodique et le deuxième matériau actif cathodique étant mélangés dans un rapport pondéral de mélange de 9,5:0,5 à 5,5:4,5,

la circularité de la particule étant calculée par l'équation 1 :

[Équation 1]

$$\text{Circularité} = 4\pi A/P^2$$

dans l'équation 1, A étant une surface de la particule et P étant une longueur circonférentielle de la particule.

2. Matériau actif cathodique pour une batterie secondaire au lithium selon la revendication 1, dans lequel le premier matériau actif cathodique et le deuxième matériau actif cathodique comprennent chacun indépendamment des particules d'oxyde métallique de lithium représentées par la formule 1 suivante :

[Formule 1] $\quad\quad Li_x\, Ni_y\, M1_{1-y}\, O_z$

(dans la formule 1, M1 est au moins un élément choisi dans le groupe constitué de B, Al, Si, Ti, V, Cr, Mn, Fe, Co, Cu, Zn, Y, Zr, Mo, Sn et W, et x est $0 < x \leq 1,1$, y est $0,8 \leq y \leq 0,98$ et z est $2,0 \leq z \leq 2,02$).

3. Matériau actif cathodique pour une batterie secondaire au lithium selon la revendication 2, dans lequel, dans la formule 1, y $0,8 \leq y \leq 0,95$.

4. Matériau actif cathodique pour une batterie secondaire au lithium selon la revendication 1, dans lequel le premier matériau actif cathodique et le deuxième matériau actif cathodique sont mélangés dans un rapport pondéral de mélange de 9:1 à 6:4.

5. Matériau actif cathodique pour une batterie secondaire au lithium selon la revendication 1, dans lequel le matériau actif cathodique pour une batterie secondaire au lithium présente une circularité moyenne de 0,9 à 0,96.

6. Matériau actif cathodique pour une batterie secondaire au lithium selon la revendication 1, dans lequel le deuxième matériau actif cathodique présente une circularité inférieure à 0,96.

7. Matériau actif cathodique pour une batterie secondaire au lithium selon la revendication 1, dans lequel le premier matériau actif cathodique présente une circularité comprise entre 0,95 et 0,96 et le deuxième matériau actif cathodique présente une circularité comprise entre 0,9 et 0,95.

8. Matériau actif cathodique pour une batterie secondaire au lithium selon la revendication 1, dans lequel le premier matériau actif cathodique présente une structure polycristalline et le deuxième matériau actif cathodique présente une structure monocristalline.

9. Matériau actif cathodique pour une batterie secondaire au lithium selon la revendication 1, dans lequel le diamètre moyen des particules (D50) du deuxième matériau actif cathodique est inférieur au diamètre moyen des particules (D50) du premier matériau actif cathodique,

le diamètre moyen des particules (D50) étant le diamètre le plus long des particules pour une fraction volumique de 50 % dans une distribution cumulative de la taille des particules.

10. Matériau actif cathodique pour une batterie secondaire au lithium selon la revendication 9, dans lequel le premier matériau actif cathodique a un diamètre moyen de particules (D50) de 8 à 20 μm et le deuxième matériau actif cathodique a un diamètre moyen de particules (D50) de 2 à 8 μm.

11. Matériau actif cathodique pour une batterie secondaire au lithium selon la revendication 1, dans lequel le premier matériau actif cathodique présente une structure à particules secondaires et le deuxième matériau actif cathodique présente une structure à particules individuelles.

**12.** Matériau actif cathodique pour une batterie secondaire au lithium selon la revendication 1, dans lequel le matériau actif cathodique présente une densité de tapotement de 3,66 $g/cm^3$ ou plus, après 1000 tapotements à une pression de 20 MPa.

**13.** Cathode pour une batterie secondaire au lithium, comprenant une couche de matériau actif cathodique qui comprend le matériau actif cathodique pour une batterie secondaire au lithium selon la revendication 1.

**14.** Batterie secondaire au lithium comprenant :

une cathode comprenant le matériau actif cathodique pour une batterie secondaire au lithium selon la revendication 1 ; et
une anode disposée de manière à faire face à la cathode.

[FIG. 1]

[FIG. 2]

[FIG. 3A]

[FIG. 3B]

[FIG. 4A]

[FIG. 4B]

[FIG. 5A]

[FIG. 5B]

[FIG. 5C]

**EP 4 195 324 B1**

**REFERENCES CITED IN THE DESCRIPTION**

**Patent documents cited in the description**

- US 2021167366 A1
- WO 2021040033 A1